# EUROPÄISCHE PATENTSCHRIFT

(11) **EP 2 901 844 B1**
(45) Veröffentlichungstag und Bekanntmachung des Hinweises auf die Patenterteilung: **16.08.2017**
(21) Anmeldenummer: 15153840.2
(22) Anmeldetag: 04.02.2015
(51) Int. Cl.: A01D 89/00

(54) **Erntegutaufnehmer**
Crop collecting device
Élément récepteur de récolte

(30) Priorität: 04.02.2014 DE 102014101371
(43) Veröffentlichungstag der Anmeldung: 05.08.2015
(73) Patentinhaber: Reiter, Thomas, 4707 Schlüsselberg (AT)
(72) Erfinder: Reiter, Thomas, 4707 Schlüsselberg (AT)
(74) Vertreter: Puschmann Borchert Bardehle Patentanwälte Partnerschaft mbB

(56) Entgegenhaltungen:
- WO-A1-2013/007939
- DD-A1- 143 496
- DE-A1- 3 238 210
- DE-A1-102011 010 663
- DE-T2- 69 523 719
- US-B1- 6 205 757

## Beschreibung

Die Erfindung betrifft einen Erntegutaufnehmer gemäß dem Oberbegriff des Anspruches 1.

Die DD 143 496 offenbart einen Erntegutaufnehmer, der ein Tragelement und eine Welle umfasst. Die Welle trägt Aufnahmewerkzeuge, welche durch Rotation der Welle Erntegut vom Boden in eine Zuführeinrichtung fördern. Ferner weist der Erntegutaufnehmer Fortbewegungsmittel auf, die als Bodenkopiertaster über den Boden bewegt werden und damit vertikal beweglich gegenüber dem Rahmen gelagert sind, wobei an dem Rahmen auch eine Förderschnecke zur Weiterförderung des Ernteguts befestigt ist. Der Erntegutaufnehmer dient zur Ab-/Aufnahme von Erntegut vom Boden, welches zur Weiterverarbeitung an weitere Arbeitsmittel, insbesondere Fördermittel, übergeben werden kann.

Durch die federnde Schwimmstellung der Kopiertaster ergibt sich eine gute Bodenanpassung, wobei jedoch ein großer Versatz zwischen zwei benachbarten Tastkufen zu einer Zerstörung der Welle führen kann.

Die WO 2013/007939 A1 beschreibt einen Erntegutaufnehmer, auch als Pick-UP bezeichnet, an welchem starre Wellen über mehrere Segmente, jeweils mittels Elementrahmen bzw. Tragstrukturen drehbar an einen übergeordneten Rahmen angebunden sind. Die Segmente und Wellen der Segmente sind über Gelenke verbunden, damit eine Verbesserung der Anpassung an die Bodenkontur um eine Achse parallel zur Fahrtrichtung erfolgt, indem die Verkippung der einzelnen Elemente um eine Achse parallel zur Fahrtrichtung ermöglicht wird.

Die US 6 205 757 B1 offenbart einen Bandschwader, der an einer Deichsel zwei Ausleger befestigt hat. Über eine zentrale Wippenaufhängung ist ein Förderband und eine Aufnahmeeinrichtung gelagert. Quer zur Deichselrichtung sind beidseitig der zentralen Aufhängung das Förderband und die Aufnahmeeinrichtung an über Räder geführt, so dass der Komplex aus Förderband und Aufnahmeeinrichtung um die zentrale Aufhängung schwenken kann, wodurch eine verbesserte Bodenanpassung erreicht wird.

Ein Fortbewegungsmittel im Sinne der Erfindung dient als Aufstandsfläche des Erntegutaufnehmers und ist so gestaltet, dass es die Bewegung des Erntegutaufnehmers führt, jedoch nicht zwingend selbst angetrieben ist. Vorzugsweise sind die Fortbewegungsmittel in Form von Kufen, Gleitkufen, Rädern oder Walzen ausgebildet

Es ist daher Aufgabe der Erfindung den bekannten Erntegutaufnehmer dahingehend zu verbessern, dass die Stabilität des Erntegutaufnehmers erhöht wird und dennoch eine gute Bodenanpassung bei reduziertem Schmutzeintrag gewährleistet wird.

Die Aufgabe wird durch die Merkmale des Anspruches 1 gelöst.

Die Unteransprüche stellen vorteilhafte Weiterbildungen der Erfindung dar.

Gemäß der Erfindung umfasst der Erntegutaufnehmer ein Tragelement und eine Welle, welche Aufnahmewerkzeuge trägt, wobei wenigstens zwei bewegliche Fortbewegungsmittel vorgesehen sind, die in ihrer Vertikalrichtung veränderlich gegenüber dem Tragelement gelagert sind und die Welle, insbesondere auch starre Wellen, tragen. Ferner ist wenigstens eine Strebe vorgesehen, welche an einem Strebenlager drehbar am Tragelement derart gelagert ist, dass die Lagerachse orthogonal zur Wellenachse liegt. Über die Strebe ist das Tragelement mit den beweglichen Fortbewegungsmitteln verbunden, wobei ein Strebenlager in Axialrichtung der Strebe zwischen beweglichen Fortbewegungsmitteln angeordnet ist.

Erfindungsgemäß weist das Tragelement insbesondere Elementrahmen Fortbewegungsmittel auf, die im Bereich des Strebenlagers angeordnet sind und das Tragelement über den Boden führen. Beispielsweise überlappt die vertikale Projektion der Aufstandsfläche eines Fortbewegungsmittels die Achse des Strebenlagers. Dies sorgt für eine besonders effiziente Niveauregulierung, da die Auslenkung im Verhältnis des Abstands der beweglichen von den tragelementfesten Fortbewegungsmitteln begrenzt ist. Insbesondere ist das tragelementfeste Fortbewegungsmittel mittig zwischen den beiden benachbarten beweglichen Fortbewegungsmitteln etwa angeordnet, wobei die vertikale Projektion der Aufstandsfläche eines Fortbewegungsmittels die Achse des Strebenlagers überlappen kann.

Das Tragelement kann an eine Zugmaschine angebunden werden und trägt die Aufnahmewerkzeuge und wenigstens die beweglichen Fortbewegungsmittel im Transportzustand beabstandet zum Boden. Die Fortbewegungsmittel können vorzugsweise so gestaltet sein, dass die Aufstandsflächen der beweglichen und der tragelementfesten Fortbewegungsmittel in der Seitenansicht in Fahrtrichtung überlappen.

In einer weiteren Ausführungsform sind Anschlagmittel vorgesehen, welche die Drehung der Strebe um die Lageraufnahme begrenzen und somit nur einen vordefinierten Drehwinkel der Strebe erlauben. Dadurch kann, insbesondere bei der Verwendung mehrerer solcher Strebenabschnitte, eine Überstreckung der Welle vermieden werden. Im Falle einer elastischen Welle liegt die Lagerachse orthogonal zur elastischen Welle im gestreckten Zustand.

Eine elastische Welle im Sinne der Erfindung weist eine Biegeelastizität auf, die im belasteten Betrieb eine Durchbiegung der Wellenmitte von wenigstens 1 cm, insbesondere wenigstens 2cm, insbesondere wenigstens 3cm auf eine Länge von 3m zulässt.

In einer weiteren bevorzugten Ausgestaltung kann die Welle elastisch ausgestaltet sein, was für eine verbesserte Bodenanpassung sorgt.

In einer besonders bevorzugten Ausführungsform weist der erfindungsgemäße Erntegutaufnehmer wenigstens zwei Streben auf, die jeweils mit dem Tragelement verbunden sind. In Verbindung mit der elastischen Welle gewährleistet die Strebe eine gewissermaßen sanfte Verformung der Welle. Durch zwei Streben kann die elastische Welle über mehrere Teilbereiche verformt werden, wodurch eine verbesserte Anpassung realisiert werden kann. Es können auch mehrere, insbesondere elastische, Wellen vorhanden sein, die vorzugsweise der Anzahl der Streben entsprechen.

Eine elastische Welle im Sinne der Erfindung kann auch mehrteilig ausgebildet sein, wobei der Übergang der Wellenteile derart gestalte ist, dass eine Achsidentität im Übergangsbereich gewährleistet ist und so eine Relativbewegung der Wellenachsen im Übergangsbereich verbindet wird.

In besonders vorteilhafter Weise sind die beiden Streben über ein gemeinsames bewegliches Fortbewegungsmittel verbunden. Dadurch wird eine möglichst gleichmäßige flügelschlagartige Verformung der elastischen Welle gewährleistet.

Für den Fall, dass mehrere Streben vorgesehen sind, ist es sinnvoll, wenigstens zwei Streben ein tragelementfestes Fortbewegungsmittel zuzuordnen. Dieses ist vorzugsweise im Bereich des Strebenlagers am Tragelement angeordnet.

Zusätzlich können die beweglichen Fortbewegungsmittel über ein elastisches Joch verbunden sein. Ein elastisches Joch im Sinne der Erfindung ist in Vertikalrichtung biegeweich ausgestaltet und verformt sich in vertikaler Richtung analog zur elastischen Welle. Das elastische Joch kann aus mehreren Jochteilen gebildet werden. Vorzugsweise kann die Anzahl der elastischen Bereiche des elastischen Jochs der Anzahl der Streben entsprechen.

Durch das elastische Joch wird der Erntegutaufnehmer quer zur Fahrtrichtung zusätzlich versteift, wobei die Beweglichkeit in vertikaler Richtung, die für die Bodenanpassung notwendig ist, erhalten bleibt.

Bei Verwendung eines elastischen biegeweichen Jochs kann die Strebe auch mit dem elastischen Joch verbunden sein. Auf diese Weise wirken auftretende hohe Vertikalkräfte nicht auf das elastische Joch sondern können vom Tragelement aufgenommen werden.

Dadurch können Verwerfungen des elastischen Joches und der elastischen Welle vermieden werden. Bei der Anbindung der Strebe an das elastische Joch ist zu beachten, dass diese derart erfolgt, dass eine translatorische Relativbewegung zwischen Strebe und elastischem Joch in axialer Richtung der Strebe erfolgen kann. Dadurch kann eine Führung des Jochteils durch die Strebe gewährleistet werden, ohne die Biegecharakteristik des elastischen Joches zu beeinflussen. Die Strebe wirkt dann im Wesentlichen als Sekante der bogenförmigen Verformung von elastischem Joch und elastischer Welle.

Zur Weiterbildung des Jochs und der am Joch befestigten Abstreifer wird auf die PCT/EP2013/068619, insbesondere auf die Ausführungen der Fig. 1 und Fig. 2, sowie die Ausführungen der Ansprüche 5 bis 13 verwiesen. Die vertikale Beweglichkeit der Fortbewegungsmittel kann über am Tragelement angelenkte Lenker umgesetzt werden. Durch die Lenkeranordnung können die Fortbewegungsmittel in Fahrtrichtung und quer zur Fahrtrichtung stabilisiert werden und dennoch eine vertikale Bewegung ausführen.

Eine besonders bevorzugte Ausführungsform legt das Strebenlager für die Strebe mittig zwischen den zwei beweglichen Fortbewegungsmitteln fest. Dies sorgt für eine Gleichverteilung der Aufstandskräfte.

In einer Weiterbildung der Erfindung kann zur Übertragung der durch die Strebe aufgeprägten Verformung auf die elastische Welle ein Lagerelement vorgesehen sein, das die elastische Welle an zwei axial beabstandeten Lagerpunkten lagert. Die Lagerpunkte sind steif miteinander verbunden. Die Lagerelemente sind vorzugsweise in Axialrichtung nahe den beweglichen Fortbewegungsmitteln angeordnet. Insbesondere sind diese auch in Fahrtrichtung nahe den beweglichen Fortbewegungsmitteln angeordnet.

Durch die Lagerelemente ist die elastische Welle über einen Teilabschnitt im Abstand der Lagerpunkte versteift, wodurch die Welle stabilisiert und ihre Biegelinie beeinflusst wird. Die Vertikalbewegung eines Fortbewegungsmittels wird somit gleichsam auf beide Lagerpunkte übertragen. Durch diese Ausgestaltung wird der Verschleiß der elastischen Welle deutlich verringert, da auf Grund der Versteifung die beim Biegen der elastischen Welle auf die elastische Welle wirkenden Kräfte besser verteilt werden. Zudem kann die durch die Strebe vorgegebene bogenförmige Verformung ideal auf die elastische Welle übertragen werden.

Vorzugsweise werden die Lagerpunkte durch zwei beabstandete, jeweils einen Lagerpunkt aufweisende einzelne Lager, insbesondere Radialkugellager, gebildet.

Die Lager können in eine Konsole eingearbeitet sein, welche die einzelnen Lager in axialer Richtung beabstandet und steif verbindet. Auf diese Weise kann der Abstand zwischen den Lagerpunkten so gewählt werden, dass er den Anforderungen entspricht, die sich aus der Dimensionierung des Erntegutaufnehmers, der Bodenbeschaffenheit im beabsichtigten Einsatzgebiet etc. ergibt, so dass eine angestrebte Biegelinie eingestellt werden kann.

Gemäß einem weiteren Aspekt der Erfindung kann das Lagerelement eine Nabe aufweisen, über welche die elastische Welle mit den Lagerpunkten verbunden ist.

Die Nabe ermöglicht eine Anpassung der Querschnittsprofile zwischen elastischer Welle und Lagerelement, insbesondere durch formschlüssige Aufnahme der Welle in der Nabe in Umfangsrichtung. Dies sorgt für einen besonders runden Lauf der Welle im Lagerelement unabhängig von ihrer Querschnittsgeometrie. Durch die Dimensionierung der Nabe, insbesondere in axialer Erstreckung, kann zudem eine Versteifung der elastischen Welle über den Lagerpunktabstand hinaus erfolgen.

Günstig ist es ferner, wenn der axiale Abstand der Lager so eingestellt ist, dass zwischen den Lagern wenigstens ein Aufnahmewerkzeug mit der elastischen Welle verbunden sein kann. Dadurch kann eine tote Zone in der kein Erntegut aufgenommen werden kann, die sonst am Lagerelement im Abstand der Lagerpunkte entsteht, vermieden oder zumindest deutlich verkleinert werden. Eine Totzone ergibt sich so nur im Bereich eines Lagers des Lagerelements, die meist durch die Aufnahmewerkzeuge überbrückt werden kann und damit fast vollständig vermieden werden kann. Entsprechend kann auf diese Weise insbesondere kurzes Erntegut sauber aufgenommen werden.

In einer weiteren vorteilhaften Ausgestaltung kann ein Antriebsmittel vorgesehen sein, über welches die elastische Welle mit einem Motor verbunden werden kann. Das Antriebsmittel kann bevorzugt zwischen den zwei Lagern des Lagerelements angebracht sein. Das Antriebsmittel wirkt so im stabilisierten Abschnitt der elastischen Welle. Dadurch wird Verschleiß reduziert, da vom Antriebsmittel auf die elastische Welle wirkenden Kräfte weitgehend spielfrei übertragen werden können.

Insbesondere ist das Antriebsmittel mit einem beweglichen Fortbewegungsmittel fest verbunden, das zwei benachbarte Streben miteinander verbindet. Dadurch liegt der Antrieb bei Vorhandensein zweier Streben im Scheitelpunkt der Bogenlinie. Ferner hat eine solch mittige Anbringung den Vorzug, dass dies zur Aufteilung der Drehmomente und zur Verringerung der Gefahr des Auftretens von Schwingungen der elastischen Welle führt. Durch den Anschluss des Antriebs in der Mitte der Arbeitsbreite des Erntegutaufnehmers können Momente und auftretende Trägheiten halbiert werden.

Um eine weiter verbesserte Kraftübertragung zwischen Antriebsmittel und elastischer Welle zu erreichen, kann das Antriebsmittel über eine Nabe mit der Welle verbunden sein. Neben einer Profilanpassung verbessert diese Ausgestaltung die Stabilität der Aufnahmevorrichtung und reduziert den Verschleiß des Antriebsmittels.

Das Antriebsmittel kann vorzugsweise als Zahnrad ausgebildet sein, welches über ein Zahnradgetriebe mit einem Motor verbunden sein kann.

Für den Fall, dass neben der elastischen Welle auch ein elastisches Joch zur Verbindung der beweglichen Fortbewegungsmittel vorgesehen ist, kann dieses über Lagerelemente, die eine Konsole aufweisen, mit der elastischen Welle verbunden werden.

Das elastische Joch ist derart elastisch verformbar, dass eine Relativbewegung des Fortbewegungsmittels gegenüber dem Rahmenteil in vertikaler Richtung zur Achse des Jochs möglich ist.

Einerseits wird durch die Wahl eines geeigneten Abstands der beiden Lagerpunkte voneinander die Biegelinie der elastischen Welle direkt beeinflusst, andererseits wird durch die Konsole das Joch über einen Abschnitt einer definierten axialen Ausdehnung, der abhängig von Elastizität und Geometrie des elastischen Jochs ist, so versteift, dass bei einem Durchbiegen der elastischen Welle die Jochbiegelinie und die Wellenbiegelinie annähernd identisch sind, wobei durch die Anbindung des elastischen Jochs und der elastischen Welle an die wenigstens eine Strebe eine gleichmäßige bogenförmige Verformung aufgeprägt wird. Durch diese Ausgestaltung wird die Führung der Aufnahmewerkzeuge der Bodenkontur optimal angepasst und zugleich wird die Gefahr zerstörerischer Spannungen zwischen Welle und Joch eliminiert.

In einer besonders vorteilhaften Ausführungsform umfasst ein erfindungsgemäßer Erntegutaufnehmer drei Lagerelemente. Ein erstes Lagerelement ist mittig an der elastischen Welle vorgesehen, zwischen dessen zwei Lagern ein Antriebsmittel angebracht ist. Ferner sind an den beiden Enden der elastischen Welle zwei weitere Lagerelemente vorgesehen, wobei zwischen zwei beabstandeten Lagern dieser Lagerelemente wenigstens ein Aufnahmewerkzeug angebracht ist.

Die drei Lagerelemente sind insbesondere über ein elastisches Joch miteinander verbunden. Das elastische Joch ist je über eine Konsole des Lagerelements mit der elastischen Welle und je einem der drei Fortbewegungsmittel fest verbunden, wobei die axiale Anordnung der Lagerelemente im Aufstandsbereich des zugeordneten Fortbewegungsmittels liegen kann.

Zudem kann das mittlere Fortbewegungsmittel mit je einer benachbarten Strebe verbunden sein, die das mittlere bewegliche Fortbewegungsmittel mit je einem äußeren beweglichen Fortbewegungsmittel verbindet. Durch diese Anordnung wird durch die Verbindung mit den Streben dem elastischen Joch und der elastischen Welle eine im Wesentlichen bogenförmige Verformung aufgeprägt.

Die elastische Welle und das elastische Joch sind dabei über die Lagerelemente bereichsweise so versteift, dass eine identische Biegelinie von elastischem Joch und elastischer Welle realisierbar ist. Durch die Identität der Biegelinien von elastischem Joch und elastischer Welle kann der zerstörungsfreie Betrieb des Erntegutaufnehmers trotz einer überbestimmten Lagerung erfolgen. Dadurch wird einerseits eine stabile Anordnung von Antrieb und elastischer Welle mit hervorragender Kraftübertragung und geringem Verschleiß erreicht und andererseits eine ausreichend stabile Lagerung der elastischen Welle, die eine sehr flexible Höhenanpassung der Aufnahmewerkzeuge ermöglicht und tote Zonen, die sonst an Lagerelementen entstehen, weitestgehend eliminiert.

Weitere Vorteile, Merkmale und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen und in der Zeichnung werden die in der unten aufgeführten Liste der Bezugszeichen verwendeten Begriffe und zugeordneten Bezugszeichen verwendet. In der Zeichnung bedeutet:
- Fig. 1: eine Draufsicht auf einen erfindungsgemäßen Erntegutaufnehmer ;
- Fig. 2: eine Ansicht des Erntegutaufnehmers in Fahrtrichtung;
- Fig. 3a: eine Detailansicht des Erntegutaufnehmers in Fahrtrichtung;
- Fig.3b: eine perspektivische Ansicht der Detailansicht aus Fig. 3a entgegen der Fahrtrichtung schräg von oben;
- Fig. 4: eine schematische Darstellung eines Erntegutaufnehmers bei der Bearbeitung eines Bodens in Wannenlage;
- Fig. 5: eine Ansicht des Erntegutaufnehmers in Fahrtrichtung;
- Fig. 6: eine schematische perspektivische Teilschnittansicht eines Lagerelements, und
- Fig. 7: eine perspektivische Teilschnittansicht eines Lagerelements.

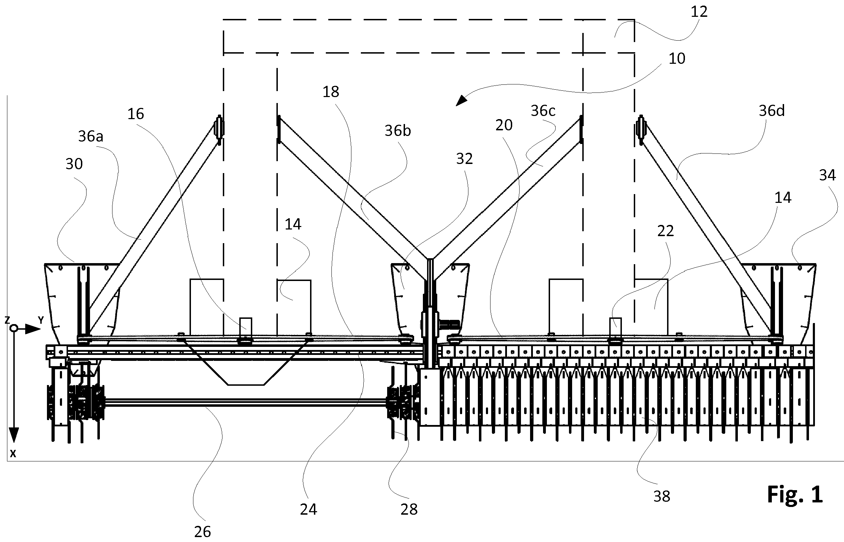

Fig. 1 zeigt eine Draufsicht auf den erfindungsgemäßen Erntegutaufnehmer 10. Der erfindungsgemäße Erntegutaufnehmer 10 umfasst einen Rahmen 12, der als Tragelement dient. Der Rahmen 12 wird über schematisch dargestellte rahmenfeste Kufen 14 über den Boden geführt. Ferner sind im Rahmen 12 Lagerzapfen 16, 22 vorgesehen, die je eine Strebe 18, 20 drehbar gegenüber dem Rahmen 12 lagern. Die Lagerachsen liegen in Fahrtrichtung X.

Der Erntegutaufnehmer 10 umfasst ferner ein elastisches Joch 24, sowie eine elastische Welle 26. An der elastischen Welle 26 sind Zinkenscheiben 28 zur Aufnahme von Erntegut angebracht. Das elastische Joch 24 ist biegeweich in Vertikalrichtung Z ausgestaltet und verbindet die beweglichen Kufen 30, 32, 34.

Die Kufen 30, 32, 34 sind über zugeordnete Lenker 36a, 36b, 36c, 36d an dem Rahmen 12 angebunden.

Durch die Anbindung der Lenker 36a, 36b, 36c, 36d kann eine Stabilisierung in Fahrtrichtung und quer zur Fahrtrichtung erfolgen, wohingegen eine Vertikalbewegung der beweglichen Kufen 30, 32, 34 ermöglicht wird.

Bei einem Versatz, beispielsweise der Kufen 32, 34 aufgrund der Bodenkontur führt dies zu einer Drehung der Strebe 20 um den Lagerzapfen 22. Aufgrund vorgesehener Begrenzungsmittel zur Begrenzung der Drehung der Strebe 20 um den Lagerzapfen 22, wird eine Überstreckung der elastischen Welle 26 und des elastischen biegeweichen Joches 24 vermieden.

Fig. 1 zeigt ferner, dass am elastischen Joch 24 Abstreifer 38 angeordnet sind, die sich gemäß der Biegung des Jochs 24 in ihrem Winkel an die Zinkenscheiben 28 anpassen.

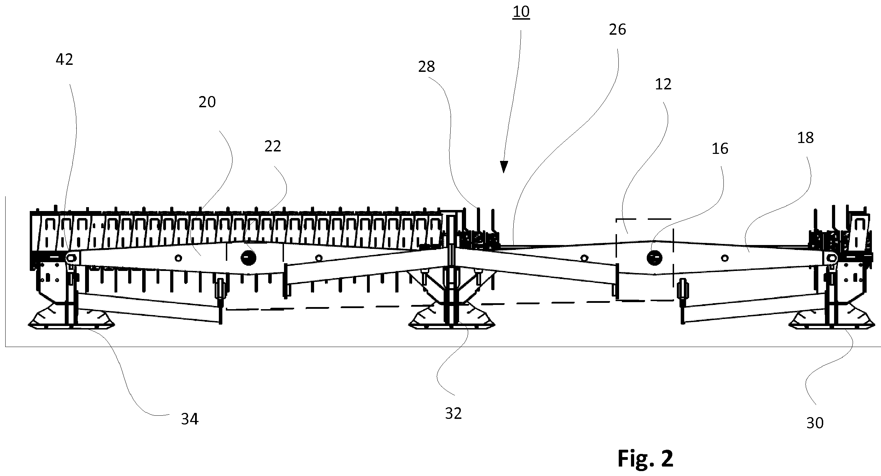

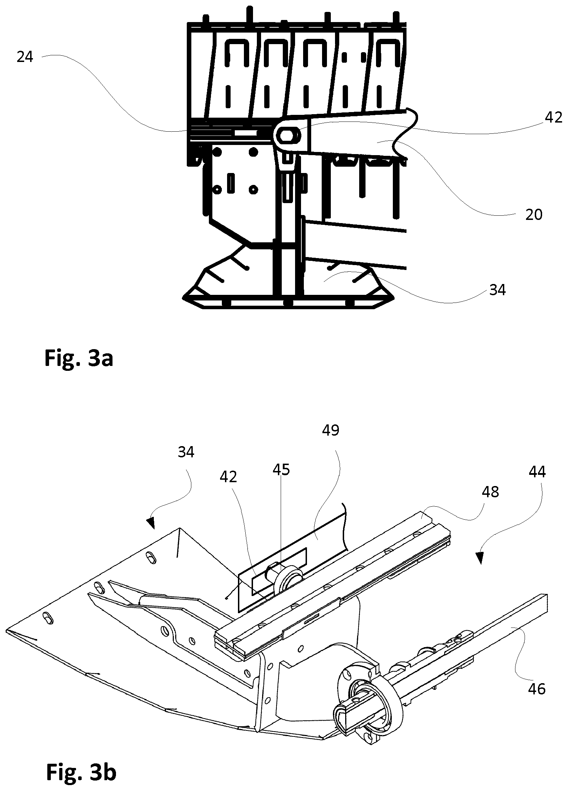

Fig. 2 zeigt eine Ansicht des Erntegutaufnehmers 10 in Fahrtrichtung X. Exemplarisch ist hier der Elementrahmen 12, der als Tragelement fungiert, angedeutet. Ferner sind die Aufnahmezapfen 16, 22 dargestellt. Die vertikal beweglichen Kufen 30, 32, 34 sind über ein in axialer Richtung der Strebe 18, 20 angeordnetes Langloch 42 mit der Strebe verbundenen, um eine Längendifferenz von elastischem Joch und der steifen Strebe 20 zu kompensieren. Dadurch wird eine kreisbogenförmige Verformung des elastischen Joches 24 und der elastischen Welle 26 ermöglicht. Die Streben 18, 20 agieren dabei als Sekanten der durch den Versatz der Fortbewegungsmittel entstehenden Kreisbogensegments. Die Aufhängung wird in Fig. 3a, 3b genauer beschrieben.

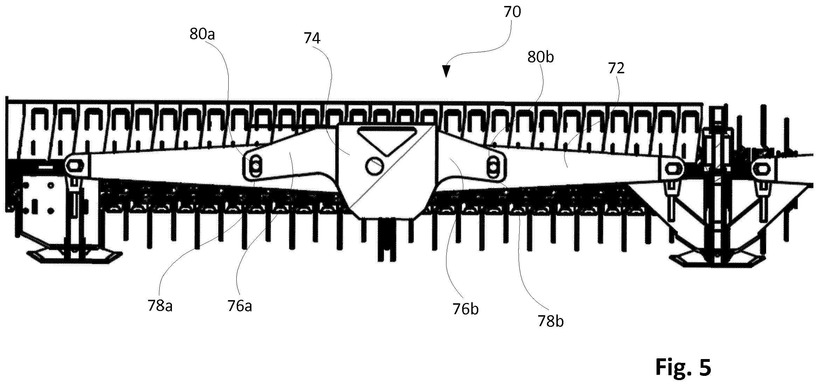

Wie Fig. 2 weiter zu entnehmen ist, sind die Streben 18,20 über die mittlere Kufe 32, analog Fig.5, miteinander verbunden. Durch diese Verbindung erfolgt eine Kopplung der benachbarten Wellenteile und Jochteile was zu einem flügelschlagartigen Verhalten der Streben 18, 20 um die Lagerzapfen 16, 22 führt. Dies sorgt für eine besonders effiziente Bodenanpassung der Aufnahmewerkzeuge 28, da die Kontur bogenförmig angenähert wird.

Fig. 3a zeigt in einem Ausschnitt die Kufe 34, die am Ende der Strebe 20 angeordnet ist und über ein axial liegendes Langloch 42 mit dieser verbunden ist. Das elastische Joch 24 ist in dieser Ausgestaltung fest mit der Kufe 34 verbunden. Durch eine dergestaltige Lagerung der Kufen 30, 32, 34 an der Strebe 20 wird eine bogenförmige Verformung des elastischen Joches 24 und der elastischen Welle 26 in engen Grenzen erlaubt, was innerhalb dieser Grenzen eine gute Bodenanpassung gewährleistet und darüber hinaus ein Überstrecken und damit eine Zerstörung des Erntegutaufnehmers verhindert.

So kann gewissermaßen über die drehbewegliche Lagerung der Strebe 20 eine Grobanpassung an die Bodenkontur über die Strebe 20 vorgenommen werden und ferner über die translatorische bewegliche Anbindung der vertikal beweglichen Kufen 30, 32, 34 eine Feinanpassung des elastischen Joches 24 und somit der elastischen Welle 26 mit ihren Aufnahmewerkzeugen 28 erreicht werden.

Fig. 3b zeigt eine perspektivische Ansicht der Detailansicht aus Fig. 3a entgegen der Fahrtrichtung von schräg oben. Gut erkennbar an dieser Darstellung ist die Anbindung der Kufe 34 an die schematisch dargestellte Strebe 49. Die Konsole 44 lagert die elastische Welle 46. Ferner ist ein elastisches Joch 48 mit der Konsole 44 fest verbunden. Zur Anbindung der Konsole 44 an die schematisch dargestellte Strebe 49 umfasst die Konsole 44 einen Bolzen 45, der in einem Langloch 47 der Strebe 49 mit dieser verbunden ist. Die Konsole 44 kann somit eine translatorische Relativbewegung in Strebenachrichtung ausführen und dadurch eine Verformung des elastischen Jochs 48 und der elastischen Welle 46 gegenüber der Strebe 49 erlauben. Zudem kann die Vertikalbewegung der Kufe 34 an die Bewegung der Strebe 49 gekoppelt werden, da eine vertikale Relativbewegung des Bolzens 47 zur Strebe 49 verhindert wird. Eine mögliche Beschränkung der Drehbewegung der Strebe 49 ist in Fig. 5 näher erläutert. In der Darstellung der Fig. 3b ist hier weder ein Antriebsmittel noch ein Aufnahmewerkzeug dargestellt, so dass die Fig. 3b als grundsätzliche Darstellung eines erfindungsgemäßen Lagerelements betrachtet werden kann.

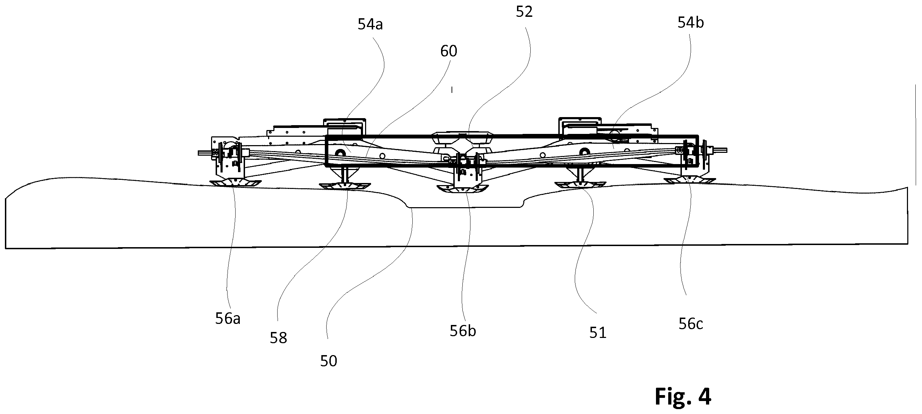

Fig. 4 zeigt eine schematische Ansicht eines erfindungsgemäßen Erntegutaufnehmers in einer übertrieben dargestellten Wannenlage. Gemäß der Darstellung ist der Untergrund 50 wannenförmig. An einem Rahmen 52 sind zwei Streben 54a, 54b drehbar aufgehängt. Die Streben 54a, 54b sind mit beweglichen Fortbewegungsmitteln 56a, 56b, 56c verbunden. Der Rahmen 52 wird über rahmenfeste Fortbewegungsmittel 51, 58 geführt. Besonders gut an dieser Darstellung ist zu erkennen, dass sich die flexible Welle 60 anpassend an die Bodenkontur 50 verformt. Insbesondere werden durch die rahmenfesten Kufen 51, 58 die Streben getragen, was ein Absinken der mittleren beweglichen Kufe 56b verhindert. Dadurch kann eine besonders effektive und verschmutzungsarme Aufnahme von Erntegut erfolgen.

Fig. 5 zeigt eine weitere Ausführungsform eines erfindungsgemäßen Erntegutaufnehmers 70, der über eine Strebe 72 mit einem Rahmen 74 verbunden ist und in diesem drehbar gelagert ist.

Zur Drehbeschränkung der Strebe 72 gegenüber dem Rahmen weist der Rahmen Begrenzungsflächen 76a, 76b auf, die mit einem Langloch 78a, 78b versehen sind, in welches jeweils ein Bolzen 80a, 80b welcher an der Strebe befestigt ist, eingreift. Auf diese Weise kann eine Verdrehsicherung realisiert werden, ohne dass die Strebe 72 selbst geschwächt werden muss.

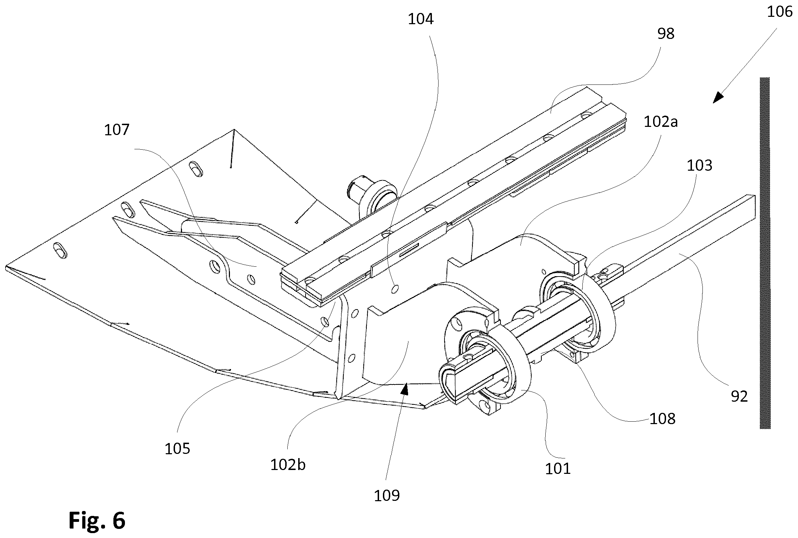

Fig. 6 zeigt eine schematische perspektivische Teilschnittansicht eines Lagerelements 106 ähnlich dem der Fig. 3b, wobei gemäß dieser Ausführungsform das Lagerelement 106 zwei Lagerpunkte in Form von zwei Radialkugellagern 101, 103 aufweist. Die beiden angedeuteten als Radialkugellager 101 und 103 ausgebildeten Lager sind an Konsolenwänden 102a und 102b befestigt, die zusammen mit einer die Konsolenwände 102a und 102b steif verbindende Verbindungswand 104 eine Konsole 109 bilden. In den Lagern 101 und 103 ist eine Nabe 108 gelagert, die die Welle 92 umgreift und deren Länge sich axial zu beiden Seiten hin über die beiden Lager 101 und 103 hinaus erstreckt. Auf der Oberseite der Verbindungswand 104 ist das elastische Joch 98 auf der Jochverbindungsfläche 105 der Konsole 109 befestigt, so dass die Konsole 109 die elastische Welle 92 mit dem elastischen Joch 98 steif verbindet. Ferner kann die Konsole 109 über einen Verbindungsbereich 107 fest mit einem Fortbewegungsmittel verbunden werden. Dadurch kann die durch die Bodenkontur in Verbindung mit den Streben aufgeprägte Verformung der elastischen Welle ideal übertragen werden.

Die Nabe 108 schafft zum einen eine Versteifung der elastischen Welle 92 im Klemmbereich sowie zum anderen eine in Drehrichtung formschlüssige Verbindung mit der Nabe 108, so dass im Bereich der Nabe 108 ein runder Lauf der elastischen Welle 92 gewährleistet ist.

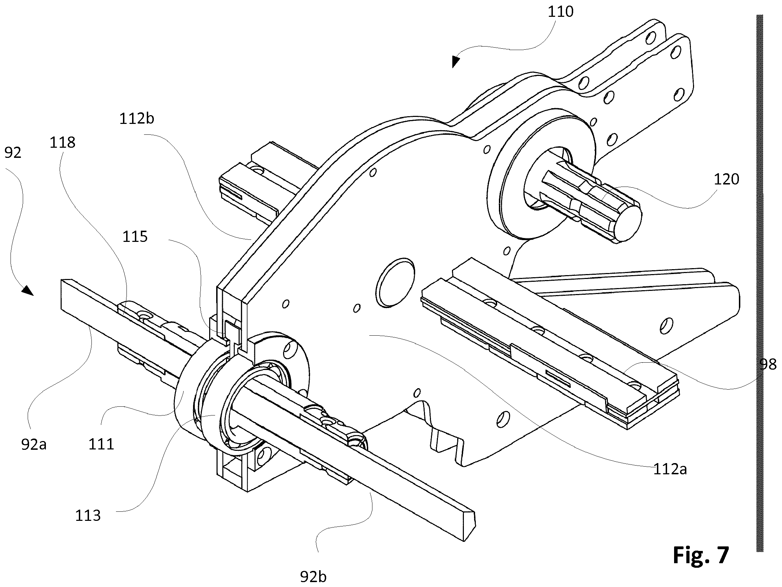

Fig. 7 zeigt eine perspektivische Teilschnittansicht eines Lagerelements 110, welches mit einem nicht dargestellten Fortbewegungsmittel fest verbunden ist und zeigt schematisch zwei als Radialkugellager ausgebildete Lager 111, 113. Diese sind in einer Konsolenwand 112a, 112b eingebettet, die als Getriebewand dient. Die in Fig. 7 gezeigte Anordnung liegt, wie Fig. 1 zu entnehmen, über dem mittleren beweglichen Fortbewegungsmittel und ist mit diesem derart fest verbunden, dass eine Relativbewegung zwischen Fortbewegungsmittel und Lagerelement 110 nicht ermöglicht wird. Die Konsolenwand 112a, 112b des Lagerelements 110 dient in dieser Ausführungsform als Gehäuse für ein nicht näher dargestelltes Getriebe. Das Getriebe wirkt auf ein an der Nabe 118 angeordnetes Zahnrad 115, welches drehfest mit der Nabe 118 verbunden ist. Dadurch kann ein Antrieb der Welle 92, welche zwei Wellenteile 92a, 92b umfasst, über den Antriebsstummel 120 erzielt werden.

Auf diese Weise dient die Nabe 118 nicht nur der Versteifung der Welle 92 im Bereich der Lageraufnahme und zur Anpassung der Wellengeometrie an die Lagergeometrie sondern kann auch als Verbindungselement der beiden Wellenteile 92a, 92b dienen. Die Verbindung der Wellenteile 92a, 92b erfolgt in Axialrichtung lösbar kraftschlüssig um eine verbesserte Wartung zu gewährleisten.

Durch die erfindungsgemäße Lagerung kann entsprechend eine ideale Identität der Biegelinie von elastischer Welle 92 und elastischem Joch 98 auf einfache Weise hergestellt werden und darüber hinaus einen verbesserten Aufnahmewirkungsgrad bereitstellen, indem die durch die Strebenführung aufgeprägte bogenförmige Verformung, wie beispielhaft in Fig. 4 gezeigt, auf das elastische Joch und die elastische Welle gleichermaßen ideal übertragen wird.

### Bezugszeichenliste

- 10: Erntegutaufnehmer
- 12: Rahmen, Tragelement
- 14: rahmenfeste Kufen
- 16: Lagerzapfen
- 18: Strebe
- 20: Strebe
- 22: Lagerzapfen
- 24: Joch
- 26: Welle
- 28: Zinkenscheiben, Aufnahmewerkzeuge
- 30: Kufe
- 32: Kufe
- 34: Kufe
- 36a: Lenker
- 36b: Lenker
- 36c: Lenker
- 36d: Lenker
- 38: Abstreifer
- 42: Langloch
- 44: Konsole
- 45: Bolzen
- 46: elastische Welle
- 48: Joch
- 49: Strebe
- 50: Untergrund, Bodenkontur
- 51: Fortbewegungsmittel
- 52: Rahmen
- 54a: Strebe
- 54b: Strebe
- 56a: Fortbewegungsmittel
- 56b: Fortbewegungsmittel
- 56c: Fortbewegungsmittel
- 58: Fortbewegungsmittel
- 60: flexible Welle
- 70: Erntegutaufnehmer
- 72: Strebe
- 74: Rahmen
- 76a: Begrenzungsfläche
- 76b: Begrenzungsfläche
- 78a: Langloch
- 78b: Langloch
- 80a: Bolzen
- 80b: Bolzen
- 92: Welle
- 92a: Wellenteil
- 92b: Wellenteil
- 98: elastisches Joch
- 101: Lager
- 102a: Konsolenwand
- 102b: Konsolenwand
- 103: Lager
- 105: Jochverbindungsfläche
- 106: Lagerelement
- 107: Verbindungsbereich
- 108: Nabe
- 109: Konsole
- 110: Lagerelement
- 111: Lager
- 112a: Konsolenwand
- 112b: Konsolenwand
- 113: Lager
- 115: Zahnrad
- 118: Nabe
- 120: Antriebsstummel

- X: Fahrtrichtung
- Z: Vertikalrichtung

## Patentansprüche

1. Erntegutaufnehmer mit einem Tragelement (12) und einer Welle (26), welche Aufnahmewerkzeuge (28) trägt, wobei wenigstens zwei bewegliche Fortbewegungsmittel vorgesehen sind, die in ihrer Vertikalrichtung veränderlich gegenüber dem Tragelement (12) gelagert sind und die Welle (26) tragen, wobei eine Strebe (18, 20) vorgesehen ist, welche mittels eines Strebenlagers (16, 22) drehbar am Tragelement (12) derart gelagert ist und das Tragelement (12) mit den beweglichen Fortbewegungsmitteln (30, 32, 34) verbindet, so dass die Achse des Strebenlagers orthogonal zur Wellenachse liegt, wobei das Strebenlager in Axialrichtung der Strebe (18, 20) zwischen den beweglichen Fortbewegungsmitteln (30, 32, 34) angeordnet ist **dadurch gekennzeichnet, dass** das Tragelement (12) Fortbewegungsmittel (14) im Bereich des Strebenlagers (16, 22) aufweist.

2. Erntegutaufnehmer nach Anspruch 1, **dadurch gekennzeichnet, dass** die Welle (26) elastisch ausgebildet ist.

3. Erntegutaufnehmer nach einem der vorangehenden Ansprüche, **dadurch gekennzeichnet, dass** Anschlagmittel vorgesehen sind, die eine Drehung der Strebe (18, 20) auf einen vordefinierten Drehwinkel begrenzen.

4. Erntegutaufnehmer nach einem der vorangehenden Ansprüche, **dadurch gekennzeichnet, dass** eine zweite Strebe (20) drehbar am Tragelement (12) gelagert ist, wobei die zweite Strebe (20) mit zwei beweglichen Fortbewegungsmitteln verbunden ist.

5. Erntegutaufnehmer nach Anspruch 4, **dadurch gekennzeichnet, dass** ein bewegliches Fortbewegungsmittel (30, 32, 34) sowohl mit der ersten als auch mit der zweiten Strebe (18, 20) verbunden ist.

6. Erntegutaufnehmer nach einem der vorangehenden Ansprüche, **dadurch gekennzeichnet, dass** die beweglichen Fortbewegungsmittel (30, 32, 34) über ein elastisches Joch (24) verbunden sind, wobei die Strebe (18, 20) mit dem elastischen Joch (24) und dem Fortbewegungsmittel (30, 32, 34) verbunden ist, dass eine translatorische Relativbewegung der Fortbewegungsmittel (30, 32, 34) in axialer Richtung der Strebe (18, 20) erfolgen kann.

7. Erntegutaufnehmer nach einem der vorangehenden Ansprüche, **dadurch gekennzeichnet, dass** die elastische Welle (12, 92), über wenigstens ein Fortbewegungsmittel (56a, 56b, 56c, 58) gegenüber dem Tragelement höhenbeweglich gelagert über eine Bodenkontur geführt wird, und zur Lagerung der elastischen Welle (12, 92) wenigstens ein Lagerelement (110, 106) mit dem Fortbewegungsmittel (56a, 56b, 56c, 58) verbunden ist das Lagerelement (110, 106) derart ausgestaltet ist, dass es wenigstens zwei in Axialrichtung beabstandete Lagerpunkte (101, 103, 111, 113) aufweist, die steif miteinander verbunden sind.

8. Erntegutaufnehmer nach Anspruch 7, **dadurch gekennzeichnet, dass** die Lagerpunkte (101, 103, 111, 113) durch zwei beabstandete, jeweils einen Lagerpunkt aufweisende Lager (101, 103, 111, 113) gebildet werden.

9. Erntegutaufnehmer nach Anspruch 7 bis 8, **dadurch gekennzeichnet, dass** das Lagerelement eine Nabe (108) aufweist, über welche die elastische Welle (92) mit den Lagerpunkten (101, 103) verbunden ist.

10. Erntegutaufnehmer nach einem der Ansprüche 7 bis 9, **dadurch gekennzeichnet, dass** der axiale Abstand der Lager so eingestellt ist, dass zwischen den Lagern (101, 103, 111, 113) wenigstens ein Aufnahmewerkzeug an der elastischen Welle (92, 92a, 92b) angebracht ist.

11. Erntegutaufnehmer nach einem der Ansprüche 7 bis 10, **dadurch gekennzeichnet, dass** ein Antriebsmittel (115) vorgesehen ist, über welches die elastische Welle (12, 92) mit einem Motor verbindbar ist, wobei das Antriebsmittel (115) zwischen den zwei Lagern (111, 113) des Lagerelements (110) angebracht ist.

12. Erntegutaufnehmer nach einem der Ansprüche 7 bis 11, **dadurch gekennzeichnet, dass** auf der elastischen Welle (92) ein mittig angebrachtes Lagerelement (110) vorgesehen ist, zwischen dessen zwei Lagern (111, 113) ein Antriebsmittel (120) angebracht ist, und dass zwei weitere Lagerelemente (106) vorgesehen sind, zwischen welchen jeweils zwei Lagern (101, 103) je wenigstens ein Aufnahmewerkzeug (14) angebracht ist.

## Claims

1. Crop collecting device having a support member (12) and a shaft (26) with pick-up tools (28) mounted thereon, with at least two movable means of locomotion being provided which are variably mounted in their vertical direction relative to the support member (12) and which carry the shaft (26), with a strut (18, 20) being provided which is rotatably mounted on the support member (12) by means of a strut bearing (16, 22) and connects the support element (12) to the movable means of locomotion (30, 32, 34) in such a manner that the axis of the strut bearing extends orthogonally relative to the axis of the shaft, said strut bearing being disposed between the movable means of locomotion (30, 32, 34) in the axial direction of the strut, **characterized in that** the support member (12) has means of locomotion (14) in the area of the strut bearing (16, 22).

2. Crop collecting device according to claim 1, **characterized in that** said shaft (26) is of an elastic design.

3. Crop collecting device according to any one of the preceding claims, **characterized in that** stop means are provided which are adapted to restrict rotation of the strut (18, 20) to a predefined angle of rotation.

4. Crop collecting device according to any one of the preceding claims, **characterized in that** a second strut (20) is rotatably supported on said support member (12), which second strut (20) is connected to two movable means of locomotion.

5. Crop collecting device according to claim 4, **characterized in that** one movable means of locomotion (30, 32, 34) is connected both to the first and second struts (18, 20).

6. Crop collecting device according to any one of the preceding claims, **characterized in that** the movable means of locomotion (30, 32, 34) are interconnected via a resilient yoke (24), with the strut (18, 20) being connected to the elastic yoke (24) and to the means of locomotion (30, 32, 34) so as to enable a translational relative movement of the means of locomotion (30, 32, 34) in the axial direction of the strut (18, 20).

7. Crop collecting device according to any one of the preceding claims, **characterized in that** the elastic shaft (12, 92) is guided over a ground contour by at least one means of locomotion (56a, 56b, 56c, 58) in a manner so as to be vertically adjustable with respect to the support member, and that at least one bearing member (110, 106) is connected to the means of locomotion (56a, 56b, 56c, 58) so as to support the elastic shaft (12, 92), that said bearing member (110, 106) is designed in such a way that it has at least two bearing points (101, 103, 111, 113) which are spaced from each other in the axial direction and which are rigidly connected to each other.

8. Crop collecting device according to claim 7, **characterized in that** said bearing points (101, 103,111,113) are formed by two mutually spaced bearings (101, 103, 111, 113) which each have a bearing point.

9. Crop collecting device according to one of claims 7 to 8, **characterized in that** the support member has a hub (108) which is adapted to connect the elastic shaft (92) to the bearing points (101, 103).

10. Crop collecting device according to any one of claims 7 to 9, **characterized in that** the axial spacing of the bearings is suitably adjusted such that at least one pick-up tool can be mounted between the bearings (101, 103, 111, 113) on the elastic shaft (92, 92a, 92b).

11. Crop collecting device according to any one of claims 7 to 10, **characterized in that** a drive means (115) is provided which can be used to connect the elastic shaft (12, 92) to a motor, which drive means (115) is mounted between the two bearings (111, 113) of the bearing member (110).

12. Crop collecting device according to any one of claims 7 to 11, **characterized in that** a centrally mounted bearing member (110) is provided on the elastic shaft (92) which has a drive means (120) mounted between its two bearings (111, 113), and that two additional bearing members (106) are provided, with at least one pick-up tool (14) each being mounted between two bearings (101, 103) each.

## Revendications

1. Récolteuse comprenant un élément porteur (12) et un arbre (26), lequel porte des outils de réception (28), dans laquelle au moins deux moyens d'avancement mobiles sont prévus, qui sont montés de manière à pouvoir changer verticalement de sens par rapport à l'élément porteur (12) et qui portent l'arbre (26), dans laquelle une entretoise (18, 20) est prévue, laquelle est montée en rotation sur l'élément porteur (12) au moyen d'un support d'entretoise (16,22) et relient l'élément porteur (12) aux moyens d'avancement mobiles (30, 32, 34), de sorte que l'axe du support d'entretoise se situe perpendiculairement à l'axe de l'arbre, dans laquelle le support d'entretoise est agencé dans la direction axiale de l'entretoise (98, 20) entre les moyens d'avancement mobiles (30, 32, 34), **caractérisée en ce que** l'élément porteur (12) comprend des moyens d'avancement (14) dans la zone du support d'entretoise (16,22).

2. Récolteuse selon la revendication 1, **caractérisée en ce que** l'arbre (26) est élastique.

3. Récolteuse selon l'une quelconque des revendications précédentes, **caractérisée en ce que** des moyens formant butée sont prévus, qui limitent une rotation de l'entretoise (18, 20) à un angle de rotation prédéfini.

4. Récolteuse selon l'une quelconque des revendications précédentes, **caractérisée en ce qu'**une deuxième entretoise (20) est montée en rotation sur l'élément porteur (12), dans laquelle la deuxième entretoise (20) est reliée à deux moyens d'avancement mobiles.

5. Récolteuse selon la revendication 4, **caractérisée en ce qu'**un moyen d'avancement mobile (30, 32, 34) est relié aussi bien à la première entretoise qu'à la deuxième entretoise (18, 20).

6. Récolteuse selon l'une quelconque des revendications précédentes, **caractérisée en ce que** les moyens d'avancement mobiles (30, 32, 34) sont reliés par un joug élastique (24), dans laquelle l'entretoise (18,20) est reliée au joug élastique (24) et au moyen d'avancement mobile (30, 32,34), **en ce qu'**un mouvement relatif en translation des moyens d'avancement mobiles (30, 32, 34) dans la direction axiale de l'entretoise (18, 20) peut être effectué.

7. Récolteuse selon l'une quelconque des revendications précédentes, **caractérisée en ce que** l'arbre élastique (12, 92) est guidé au-dessus d'un contour du sol en étant monté mobile en hauteur par rapport à l'élément porteur par l'intermédiaire d'au moins un moyen d'avancement (56a, 56b, 56c, 58), et, pour le montage de l'arbre élastique (12, 92), au moins un élément d'appui (110, 106) est relié au moyen d'avancement (56a, 56b, 56c, 58), l'élément d'appui (110, 106) étant réalisé de telle manière qu'il comprend au moins deux points d'appui (101, 103,111,113) espacés dans la direction axiale, qui sont reliés rigidement l'un à l'autre.

8. Récolteuse selon la revendication 7, **caractérisée en ce que** les points d'appui (101, 103, 111, 113) sont formés par deux appuis (101, 103, 111, 113) espacés l'un de l'autre, présentant chacun un point d'appui.

9. Récolteuse selon les revendications 7 à 8, **caractérisée en ce que** l'élément d'appui comprend un moyeu (108) par l'intermédiaire duquel l'arbre élastique (92) est relié aux points d'appui (101, 103).

10. Récolteuse selon l'une quelconque des revendications 7 à 9, **caractérisée en ce que** la distance axiale entre les appuis est ajustée de telle sorte qu'au moins un outil de réception est fixé sur l'arbre élastique (92, 92a, 92b) entre les appuis (101, 103, 111, 113).

11. Récolteuse selon l'une quelconque des revendications 7 à 10, **caractérisée en ce qu'**un moyen d'entraînement (115) est prévu, par l'intermédiaire duquel l'arbre élastique (12, 92) peut être relié à un moteur, dans laquelle le moyen d'entraînement (115) est monté entre les deux appuis (111,113) de l'élément d'appui (110).

12. Récolteuse selon l'une quelconque des revendications 7 à 11, **caractérisée en ce qu'**un élément d'appui (110) monté de manière centrale, entre les deux appuis (111, 113) duquel est fixé un moyen d'entraînement (120), est prévu sur l'arbre élastique (92), et **en ce que** deux autres éléments d'appui (106), entre les deux appuis (101, 103) respectifs desquels est fixé dans chaque cas au moins un outil de réception (14), sont prévus.
